# EUROPEAN PATENT SPECIFICATION

(11) **EP 4 607 308 B1**
(45) Date of publication and mention of the grant of the patent: **08.07.2026**
(21) Application number: 25153117.4
(22) Date of filing: 21.01.2025
(51) Int. Cl.: G05D 1/225, G05D 1/249, G05D 1/646, B62D 15/02

(54) **VEHICLE MANUFACTURING SYSTEM AND VEHICLE MANUFACTURING METHOD**
FAHRZEUGHERSTELLUNGSSYSTEM UND FAHRZEUGHERSTELLUNGSVERFAHREN
SYSTÈME DE FABRICATION DE VÉHICULE ET PROCÉDÉ DE FABRICATION DE VÉHICULE

(30) Priority: 26.02.2024 JP 2024026435
(43) Date of publication of application: 27.08.2025
(73) Proprietor: TOYOTA JIDOSHA KABUSHIKI KAISHA, Aichi-ken, 471-8571 (JP)
(72) Inventor: IWAZAKI, Noritsugu, Toyota-shi, 471-8571 (JP); KANOU, Takeshi, Toyota-shi, 471-8571 (JP); INOUE, Go, Toyota-shi, 471-8571 (JP); OKAMOTO, Yuki, Toyota-shi, 471-8571 (JP); OHARA, Kento, Toyota-shi, 471-8571 (JP); TAKAHASHI, Satoshi, Toyota-shi, 471-8571 (JP)
(74) Representative: D Young & Co LLP

(56) References cited:
- JP-B1- 7 392 886
- US-A1- 2013 054 074
- US-A1- 2013 304 300
- US-A1- 2018 141 584
- US-A1- 2021 253 166
- US-A1- 2024 329 649
- MOHAMMAD ROKONUZZAMAN ET AL: "Review and performance evaluation of path tracking controllers of autonomous vehicles", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 15, no. 5, 17 March 2021 (2021-03-17), pages 646 - 670, XP006110711, ISSN: 1751-956X, DOI: 10.1049/ITR2.12051

## Description

### BACKGROUND

The present disclosure relates to a vehicle manufacturing system and a vehicle manufacturing method.

Published Japanese Translation of PCT International Publication for Patent Application, No. 2017-538619 discloses a vehicle manufacturing system. A vehicle travels, by autonomous control or remote control, in a system for producing vehicles.

JP 7 392886 B1 and US 2024/329649 A1 disclose a remote control unit that causes a moving object to move by remote control, the moving object being able to move by the remote control in a manufacturing process in a factory that manufactures the moving object.

### SUMMARY

The invention is defined by the independent claims. Optional embodiments are defined by the dependent claims. In a vehicle manufacturing factory, a plurality of vehicles perform self-propelled transportation. When the plurality of vehicles perform self-propelled transportation, each of the vehicles is controlled in accordance with control instruction values. For example, upon receiving control instruction values from a server or the like, a vehicle controls its traveling speed and steering angle so as to achieve the control instruction values. Then, the vehicle moves along a traveling path in the factory.

In order to control the vehicles, it is required to accurately control the steering. However, in a state in which steering motors and the like are not adjusted in a manufacturing process and so on, it is possible the steering angle may not be controlled with a high accuracy. For example, each vehicle controls the steering motor using a straight-ahead steering angle when the vehicle travels straight ahead as a reference value. When there are individual differences in steering motors or steering mechanisms, it is required to obtain a straight-ahead steering angle with a high accuracy.

An object of the present disclosure is to provide a vehicle manufacturing system and a vehicle manufacturing method capable of appropriately controlling traveling of a vehicle.

A vehicle manufacturing system according to the present disclosure includes: an acquisition unit for acquiring a set value of a straight-ahead steering angle in a manufacturing process or a transporting process; a detection unit for detecting position information on a position of the vehicle in a transverse direction or an orientation of the vehicle; a first control unit for controlling a steering angle of the vehicle in accordance with a straight route and the position information in such a way that the vehicle moves along the straight route in a first period in which the vehicle moves straight ahead to a first point using the set value; an update unit for updating the set value of the straight-ahead steering angle in accordance with a result of traveling in the first period to obtain an update value; and a second control unit for controlling the steering angle by making distributions of a feedback component and a feedforward component change from those in the control in the first control unit in a second period in which the vehicle moves to a second point using the update value after the vehicle reaches the first point.

In the above vehicle manufacturing system, the second control unit causes a distribution of the feedback component in the second period to be lower than that in the first period.

The above vehicle manufacturing system includes an apparatus configured to determine whether or not the vehicle is traveling straight ahead, in which the update value of the straight-ahead steering angle may be obtained in accordance with a distribution of a steering angle sensor in a period in which the apparatus determines that the vehicle is traveling straight ahead.

In the above vehicle manufacturing system, the second control unit determines a target value of the steering angle in a feedforward control in accordance with vehicle information on a size of the vehicle and a curvature of a target route, and performs, in the second period, a feedback-control of the steering angle based on information on deviation between the target route and the position information when the vehicle is steered in accordance with the target value.

In the above vehicle manufacturing system, the acquisition unit may acquire the set value based on an intermediate value when lock-to-lock steering of a steering angle is performed from one end to another end of the steering.

In the above vehicle manufacturing system, in the first period, the vehicle may move at a speed lower than that in the second period.

A vehicle manufacturing method according to the present disclosure includes: an acquisition step of acquiring a set value of a straight-ahead steering angle in a manufacturing process or a transporting process; a detection step of detecting position information on a position of the vehicle in a transverse direction or an orientation of the vehicle; a first control step of controlling a steering angle of the vehicle in accordance with a straight route and the position information in such a way that the vehicle moves along the straight route in a first period in which the vehicle moves straight ahead to a first point using the set value; an update step of updating the set value of the straight-ahead steering angle in accordance with a result of traveling in the first period to obtain an update value; and a second control step of controlling the steering angle by making distributions of a feedback component and a feedforward component change from those in the control in the first control step in a second period in which the vehicle moves to a second point using the update value after the vehicle reaches the first point.

In the above vehicle manufacturing method, in the second control step, a distribution of the feedback component in the second period is made lower than that in the first period.

In the above vehicle manufacturing method, it is determined whether or not the vehicle is traveling straight ahead, and the update value of the straight-ahead steering angle is obtained in accordance with a distribution of a steering angle sensor in a period in which the apparatus determines that the vehicle is traveling straight ahead.

In the above vehicle manufacturing method, in the second control step, a target value of the steering angle in a feedforward control is determined in accordance with vehicle information on a size of the vehicle and a curvature of a target route, and in the second period, a feedback-control of the steering angle is performed based on information on deviation between the target route and the position information when the vehicle is steered in accordance with the target value.

In the above vehicle manufacturing method, the acquisition unit may acquire the set value based on an intermediate value when lock-to-lock steering of a steering angle is performed from one end to another end of the steering.

In the above vehicle manufacturing method, in the first period, the vehicle may move at a speed lower than that in the second period.

According to the present disclosure, it is possible to provide a vehicle manufacturing system and a vehicle manufacturing method capable of appropriately controlling traveling of a vehicle.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a whole configuration of a vehicle manufacturing system according to a first embodiment;
Fig. 2 is a block diagram showing a control system of the vehicle manufacturing system;
Fig. 3 is a block diagram showing a control system of a steering angle;
Fig. 4 is a flowchart showing a vehicle manufacturing method;
Fig. 5 is a graph showing a history of measured values of a steering angle;
Fig. 6 is a diagram for describing travel control of a vehicle;
Fig. 7 is a control block diagram for describing a travel control example 1;
Fig. 8 is a flowchart for describing the travel control example 1;
Fig. 9 is a control block diagram for describing a travel control example 2; and
Fig. 10 is a flowchart for describing the travel control example 2.

### DESCRIPTION OF EMBODIMENTS

Embodiments of the present disclosure will now be described with reference to the drawings. However, the claimed disclosure is not limited to the following embodiments. Moreover, not all of the configurations described in the embodiments are essential as means for solving the problem. For the sake of clarity of the explanation, the following descriptions and drawings have been omitted and simplified as appropriate. In each drawing, the same elements have the same reference signs, and repeated descriptions have been omitted as appropriate.

### Vehicle Manufacturing System

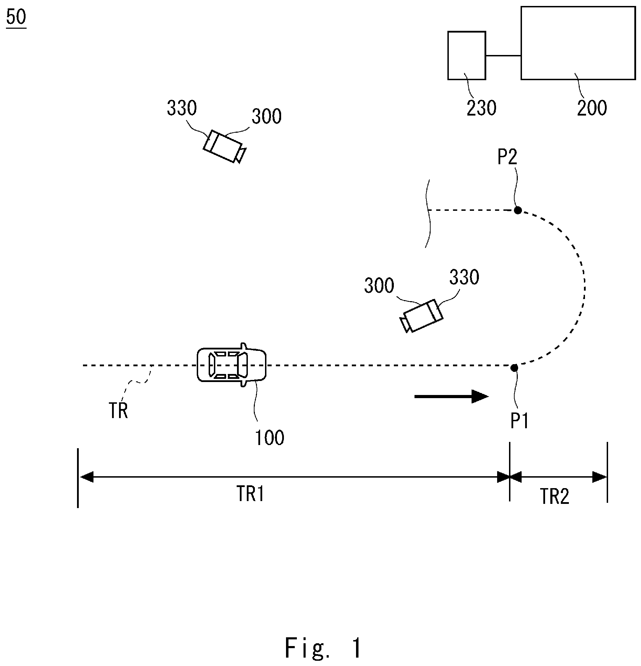

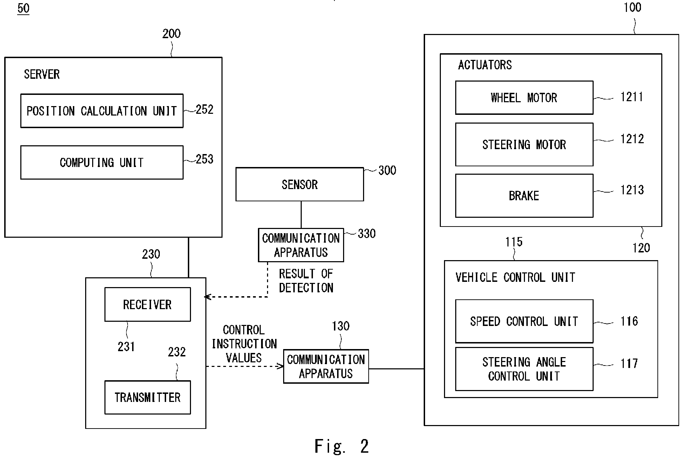

With reference to Figs. 1 and 2, a vehicle manufacturing system 50 according to this embodiment will be described. Fig. 1 is a schematic diagram showing a configuration of the vehicle manufacturing system 50. Fig. 1 shows an XY orthogonal coordinate system for the sake of clarity of the explanation.

The vehicle manufacturing system (this may also be referred to as a system) 50 is used in a vehicle manufacturing factory where a vehicle 100 is manufactured. As shown in Fig. 1, the vehicle manufacturing system 50 includes a server 200 and a sensor 300. One or more vehicles 100 are self-driving vehicles that can travel by themselves during a manufacturing process.

The sensor 300 includes a communication apparatus 330 that transmits or receives data to or from the server 200. The server 200 includes a communication apparatus 230 that transmits or receives data to or from the sensor 300. Further, as shown in Fig. 2, the communication apparatus 230 has a function of transmitting or receiving data to or from the vehicle 100. Further, the vehicle 100 includes a communication apparatus 130 that receives data from the server 200. Each of the vehicles 100 includes the communication apparatus 130.

The communication apparatus 130, the communication apparatus 230, and the communication apparatus 330 may each be general-purpose equipment such as a network hub or a router apparatus. The communication apparatus 130, the communication apparatus 230, and the communication apparatus 330 each use, for example, general-purpose wireless communication such as WiFi (registered trademark). In each of the communication apparatus 130, the communication apparatus 230, and the communication apparatus 330, an address for specifying the communication partner is set. An address for communication is, for example, an Internet Protocol (IP) address.

Each of the vehicles 100 is a vehicle whose manufacturing has not yet been completed. As shown in Fig. 1, the vehicle 100 travels along a traveling path TR set in advance. The manufacturing of the vehicle 100 is gradually done as it travels along the traveling path TR. Specifically, while the vehicle 100 travels along the traveling path, workers (not shown), a robot 600, and the like perform assembling of parts, switch operations, welding, inspection, and so on. The work in each manufacturing process is thus performed. The work in each manufacturing process is performed in a predetermined order, whereby the vehicle 100 is manufactured.

The traveling path TR includes a straight route TR1 along which the vehicle 100 travels straight ahead and a turning route TR2 in which the vehicle 100 makes a turn. The boundary between the straight route TR1 and the turning route TR2 is set as a first point P1. The end point of the turning route TR2 is set as a second point P2. In the straight route TR1, the traveling path TR has a linear shape. Coordinates of the straight route TR1, the turning route TR2, the first point P1, the second point P2, and the like are associated in map information. The straight route TR1 is a straight line. The vehicle 100 travels along the straight route TR1, which is set as a target route, before the vehicle 100 arrives at the first point P1. That is, the vehicle 100 travels so as to follow along the straight route TR1.

The turning route TR2 is a place where the vehicle 100 changes its traveling direction. In the turning route TR2, the vehicle 100 makes a U-turn. In the turning route TR2, for example, the traveling path TR has an arcuate shape having a predetermined radius of curvature. The turning route TR2 has an arcuate shape. The turning route TR2 is a semicircle having a predetermined radius. The turning route TR2 is provided in each end of the straight route TR1. For example, after traveling along the straight route TR1 in the +X direction, the vehicle 100 reaches the turning route TR2. After the vehicle 100 makes a turn by 180 degrees in the turning route TR2, the vehicle 100 travels along the straight route TR1 in the -X direction. As a matter of course, the turning angle is not limited to 180 degrees, and may be any other angle. The vehicle 100 travels along the turning route TR2, which is set as a target route, before the vehicle 100 arrives at the second point P2 from the first point P1. That is, the vehicle 100 travels so as to follow the turning route TR2.

The sensor 300 is a camera that captures an image of the vehicle 100 which is moving or is stopped. The sensor 300 captures an image of one or a plurality of vehicles 100. The sensor 300 is provided to detect vehicles. The server 200 is able to detect the position of the vehicle 100 in the factory based on the image captured by the sensor 300. The sensor 300 is installed, for example, on a wall surface, a support column, the ceiling or the like of the factory, and captures an image of the vehicle 100 from an oblique upward angle. The sensor 300 captures an image at an angle of view which includes two or more vehicles 100 that form a platoon (i.e. a formation or an alignment). The sensor 300 may be installed at a height the same as that of the vehicles 100 and capture images of two or more of the vehicles 100 from a side direction thereof.

The communication apparatus 330 transmits an image captured by the sensor 300 to the server 200. The communication apparatus 330 may transmit, besides the captured image, information obtained from the captured image to the server 200. That is, the communication apparatus 330 transmits a result of detection detected in the sensor 300. Note that the communication apparatus 330 may be built in the sensor 300 or may be separated from the sensor 300. Further, the communication apparatus 330 may be shared among a plurality of sensors 300. That is, in a case where the plurality of sensors 300 are installed, one communication apparatus 330 may transmit data to the server 200.

As described above, after the sensor 300 captures an image of the vehicle 100, the communication apparatus 330 transmits the captured image and the like to the server 200. The communication apparatus 230 receives data of the captured image from the sensor 300. The server 200 performs predetermined image processing on the image captured by the sensor 300, whereby it is possible to specify the position and the like of the vehicle.

Further, the sensor 300 for detecting the vehicle 100 is not limited to a camera. A sensor for detecting an inter-vehicle distance may be various kinds of sensors such as a RGB camera, a far-infrared camera, or a LiDAR. The sensor 300 is not limited to an optical sensor, and may instead be a radar. As a matter of course, two or more sensors 300 may be installed, or two or more sensors 300 may be used in combination with each other. For example, the sensor 300 may include a LiDAR and a camera.

The communication apparatus 330 transmits a result of the detection to the server 200. As described above, the result of the detection transmitted from the sensor 300 may be a captured image or may be information extracted from the image. In a case where, for example, the sensor 300 includes an image processing function, the sensor 300 transmits information extracted by image processing to the server 200.

Further, the sensor 300 may be mounted on the vehicle 100. The sensor 300 is, for example, an in-vehicle camera, a LiDAR, a radar, or the like. In a case where the sensor 300 is an in-vehicle camera, the sensor 300 captures an image of a front vehicle 100. In a case where the sensor 300 is an in-vehicle LiDAR, the sensor 300 measures a distance from the vehicle 100 to the front vehicle 100. The communication apparatus 130 transmits the image and a result of the measurement to the server 200.

The server 200 controls a vehicle 100 in such a way that the vehicle 100 moves along the traveling path TR. Further, the server 200 controls a plurality of vehicles 100 in such a way that the vehicles 100 perform platoon traveling. For example, the vehicles 100 travel along the traveling path **TR** in one line. The server 200 transmits a control signal to each vehicle 100 by the communication apparatus 230.

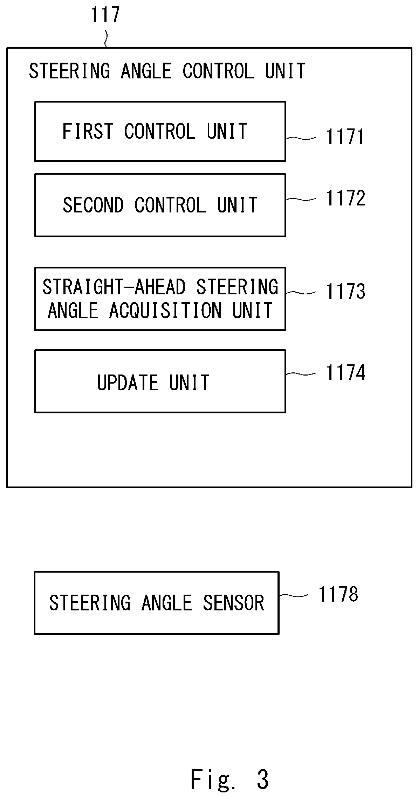

Hereinafter, with reference to Fig. 2, a control system of the vehicle manufacturing system 50 will be described. Fig. 3 is a block diagram showing the control system of the vehicle manufacturing system 50. Fig. 2 is a schematic diagram for describing communication processing in the vehicle manufacturing system 50. While a single vehicle 100 and a single sensor 300 are shown in Fig. 2, a plurality of vehicles 100 and a plurality of sensors 300 may instead be provided.

The server 200 includes a communication apparatus 230, a position calculation unit 252, and a computing unit 253. The vehicle 100 includes a vehicle control unit 115, actuators 120, and a communication apparatus 130. The vehicle control unit 115 includes a speed control unit 116 and a steering angle control unit 117. The actuators 120 include a wheel motor 1211 and a steering motor 1212. The sensor 300 includes a communication apparatus 330. Note that the server 200 is not limited to a physically single apparatus and a plurality of servers 200 may instead be provided in a distributed manner. For example, a database and so on may be a storage device, a cloud server, or the like that is provided separately from the processor.

While a configuration in which the position calculation unit 252 and the computing unit 253 are mounted on the server 200 will be described in the following description, the position calculation unit 252 or the computing unit 253 may instead be mounted on the sensor 300 or the vehicle 100. That is, the processing in the computing unit 253 and the position calculation unit 252 may be performed in the vehicle 100 or the sensor 300.

The position calculation unit 252 calculates position information indicating the position and the orientation of the vehicle based on the captured image. For example, the position calculation unit 252 may obtain XYZ global coordinates or an orientation in a map of the factory. At least a part of the processing in the position calculation unit 252 may be performed in the sensor 300. For example, the sensor 300 may include a processor or the like that performs image processing. In this case, position information indicating the position and the like of the vehicle 100 is transmitted from the communication apparatus 330 to the server 200. The position calculation unit 252 specifies each of positions of vehicles 100 on the map indicated in the map information.

The position of the vehicle 100 and the orientation of the vehicle 100 may be estimated using the captured image acquired by the sensor 300 provided in a place other than the place where the vehicle 100 is located. The position of the vehicle 100 can be acquired by calculating coordinates of measurement points of the mobile body in an image coordinate system by using, for example, the outline of the vehicle 100 detected from the captured image, and converting the calculated coordinates into coordinates in a global coordinate system. The orientation of the vehicle 100 can be estimated based on, for example, a direction of a moving vector of the mobile body calculated from changes in positions of feature points of the mobile body between frames of the captured image using an optical flow method. The orientation of the vehicle 100 may be calculated using, for example, a result of output of a yaw rate sensor or the like mounted on the vehicle 100.

The outline of the vehicle 100 included in the captured image can be detected, for example, by inputting the captured image to the detection model that uses artificial intelligence. The detection model may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the mobile body, and a ground-truth label indicating whether each area in the training image is an area indicating a mobile body or an area indicating a part other than the mobile body. When CNN learning is performed, parameters of the CNN are preferably updated in such a way that the error between the result of the output by the detection model and the ground-truth label is reduced by a back propagation method.

The computing unit 253 computes control instruction values for controlling the vehicle 100. The computing unit 253 calculates control instruction values based on the position of the vehicle 100. The computing unit 253 sends control instructions in such a way that the vehicle 100 moves along the traveling path TR. The control instruction values here may include a speed instruction value for controlling the speed of the vehicle and a steering angle instruction value for controlling a steering angle of the vehicle. The speed instruction value may be, for example, information indicating a speed, an acceleration, or the like of the vehicle 100. The steering angle instruction value is information indicating a steering angle or the like of the vehicle 100. The computing unit 253 generates control instruction values regarding the movement of the vehicle 100.

Alternatively, the control instruction values may be information on the traveling path TR. The control instruction values may include, for example, a distance (i.e., a length) of the straight route TR1, a turning radius (radius of curvature) and a turning angle of the turning route TR2.

In this manner, the computing unit 253 creates control instructions regarding movement of the vehicle 100.

The communication apparatus 230 includes a receiver 231 and a transmitter 232. The receiver 231 receives various kinds of signals, data, or the like from the sensor 300 and the vehicle 100. The receiver 231 receives, for example, data indicating a result of detection in the sensor 300. Note that the data received from the sensor 300 may be image data or may be data extracted from the image data.

The transmitter 232 transmits various kinds of signals, data, or the like to the sensor 300 and the vehicle 100. The transmitter 232 transmits, for example, control instruction values to the vehicle 100. As a matter of course, the server 200 may transmit or receive data other than those stated above. As communication in the receiver 231 and the transmitter 232, processing according to a general-purpose communication standard such as WiFi (registered trademark) may be used.

The communication apparatus 130 of the vehicle 100 is wireless terminal equipment for enabling wireless communication with the server 200. An Internet Protocol (IP) address or the like is set in the communication apparatus 130. After the communication apparatus 130 of the vehicle 100 receives control instruction values, the vehicle 100 moves in accordance with the control instruction values.

The actuators 120 include a wheel motor 1211 for driving wheels, a steering motor 1212 for controlling the steering angle, a brake 1213 for stopping the vehicle, and so on. The vehicle control unit 115 generates control signals to control the actuators 120 in accordance with a control instruction. The vehicle control unit 115 includes the speed control unit 116 and the steering angle control unit 117.

The speed control unit 116 outputs control signals for controlling the wheel motor 1211 and the brake 1213. For example, the speed control unit 116 controls the wheel motor 1211 in such a way that the vehicle 100 travels at a predetermined speed. Further, when the vehicle 100 is stopped, the speed control unit 116 controls the brake 1213. For example, after the vehicle 100 receives speed information calculated in the computing unit 253, the speed control unit 116 controls the rotation speed of the wheel motor 1211 in such a way that the vehicle travels at this speed.

The steering angle control unit 117 outputs a control signal for controlling the steering motor 1212. The steering motor 1212 operates with a drive amount in accordance with the control signal. For example, in a case where the vehicle 100 travels straight ahead, the steering angle control unit 117 controls the steering motor 1212 in such a way that the steering angle becomes 0 degrees. Accordingly, the wheels are controlled to be in a predetermined orientation. Further, the steering motor 1212 is controlled in accordance with a turning angle or the like. The vehicle control unit 115 may be composed of an Electronic Control Unit (ECU). The vehicle 100 can move along the traveling path TR.

In a case where, for example, the vehicle 100 travels straight ahead along the straight route TR1, the steering angle control unit 117 controls the steering motor 1212 in such a way that the steering angle becomes a straight-ahead steering angle. The following description will be given assuming that the straight-ahead steering angle at which the vehicle 100 travels straight ahead is set to be 0 degrees. Further, the steering angle when the vehicle 100 turns to the left is set to positive and the steering angle when the vehicle 100 turns to the right is set to negative. Therefore, the steering motor 1212 may control the steering angle in a range from - A degrees to +A decrees (A is a positive value).

Further, the steering angle control unit 117 performs control to determine the straight-ahead steering angle of the vehicle 100. Hereinafter, with reference to Fig. 3, control for obtaining the straight-ahead steering angle in the steering angle control unit 117 will be described. In this example, as shown in Fig. 1, an example in which the vehicle 100 travels along the turning route TR2 after traveling along the straight route TR1 will be described.

Fig. 3 is a control block diagram showing a control system in the steering angle control unit 117. The steering angle control unit 117 includes a first control unit 1171, a second control unit 1172, a straight-ahead steering angle acquisition unit 1173, and an update unit 1174. Further, a steering angle sensor 1178 is provided in the control system.

Note that the steering angle sensor 1178 is provided in the outside of the vehicle 100. For example, the steering angle sensor 1178 may be a sensor 300 such as a LiDAR or a camera. The LiDAR, the camera or the like senses the wheels, whereby the posture (i.e., the orientation) of the wheels is detected. The steering angle sensor 1178 may detect an azimuth angle of the wheels using various methods. The steering angle sensor 1178 may be a camera or a LiDAR provided in another vehicle.

Further, the steering angle sensor 1178 may be a posture sensor or an angle sensor attached to a steering mechanism, a steering motor or the like of the vehicle 100. For example, the steering angle sensor 1178 detects an azimuth angle of wheels. Alternatively, the steering angle sensor 1178 may be an encoder attached to the steering motor or the like.

The first control unit 1171 performs a feedback-control of the steering motor 1212 in such a way that the vehicle 100 travels along the straight route TR1 in a first period. The first control unit 1171 outputs a control signal to the steering motor 1212 so as to perform a feedback-control of the steering angle. In the first period, the first control unit 1171 controls the steering angle of the vehicle 100 in accordance with the straight route TR1 and the position information of the vehicle 100 in such a way that the vehicle 100 moves along the straight route TR1.

For example, the first control unit 1171 obtains information on deviation (deviation information) between the target straight route TR1 and the position information of the vehicle 100. The deviation information is a position deviation indicating a position displacement between the straight route TR1 and the position of the vehicle 100 in the transverse direction. In a case where, for example, the straight route TR1 is parallel to the X direction, the position of the vehicle 100 in the transverse direction is indicated by the Y coordinate or a distance thereof in the Y direction. Alternatively, the deviation information is an orientation deviation indicating an orientation displacement between the orientation of the target route and the orientation of the vehicle 100. As a matter of course, the deviation information may include both the position deviation and the orientation deviation.

The first control unit 1171 performs a feedback-control of the steering angle of the vehicle based on the deviation information. The first control unit 1171 multiplies the deviation information by a feedback gain to perform a feedback-control of the steering angle. The first control unit 1171 controls the steering angle of the vehicle 100 in such a way that the vehicle 100 approaches the target straight route TR1. The first control unit 1171 controls the steering angle in such a way that the vehicle 100 travels straight ahead along the straight route TR1.

The second control unit 1172 controls the steering motor 1212 in such a way that the vehicle 100 travels along the turning route TR2. The second control unit 1172 outputs a control signal to the steering motor 1212 so as to perform a feedforward-control and a feedback-control of the steering angle in a second period. Here, the second period is a period later than the first period. For example, the first period is a period before the first point P1 shown in Fig. 1, and the second period is a period after the first point P1 but before the second point P2.

The second control unit 1172 controls the steering angle by making distributions of the feedback component and the feedforward component change from those in the control in the first control unit 1171. More specifically, the second control unit 1172 controls the steering angle in a state in which the feedback component is decreased compared to that in the control in the first control unit 1171. That is, the second control unit 1172 controls the steering angle in a state in which the feedforward component is increased compared to that in the control in the first control unit 1171. The second control unit 1172 performs a feedforward-control of the steering angle. Therefore, the second control unit 1172 calculates the target steering angle in accordance with, for example, vehicle information indicating the size of the vehicle 100, the radius of curvature of the turning route TR2, and so on. The vehicle information of the vehicle 100 includes specification values indicating a wheelbase, a distance between left and right wheels, and so on. The second control unit 1172 calculates the target value of the steering angle in such a way that the turning radius of the vehicle 100 matches the radius of curvature of the turning route TR2. Note that the target value of the steering angle (this value is also referred to as a target steering angle) may be a constant value, or may change with time.

The second control unit 1172 controls the steering motor 1212 in such a way that the steering angle becomes a target steering angle in accordance with the radius of curvature of the turning route TR2. Accordingly, the vehicle 100 travels along the turning route TR2. Further, the second control unit 1172 performs a feedback-control of the steering angle based on the deviation information, like the first control unit 1171 does.

The straight-ahead steering angle acquisition unit 1173 acquires the straight-ahead steering angle of the vehicle 100. The straight-ahead steering angle acquisition unit 1173 may store the set value of the straight-ahead steering angle in a memory or the like. Alternatively, as will be described later, the straight-ahead steering angle acquisition unit 1173 may calculate the set value of the straight-ahead steering angle by lock-to-lock control when self-propelled transportation control is started. The first control unit 1171 and the second control unit 1172 each generate a feedback control signal of the steering angle based on the straight-ahead steering angle and outputs the feedback control signal to the steering motor 1212.

The update unit 1174 updates a set value of the straight-ahead steering angle based on a result of traveling of the vehicle 100 in the first period. The set value updated by the update unit 1174 will be referred to as an update value. The update unit 1174 obtains the update value of the straight-ahead steering angle based on a distribution of the measurement value of the steering angle sensor 1178 while the vehicle 100 is traveling straight ahead. For example, the system 50 determines whether or not the vehicle is traveling straight ahead, and the update unit 1174 obtains an update value of the straight-ahead steering angle based on a distribution of the steering angle sensor 1178 during a period in which it is determined that the vehicle 100 travels straight ahead. For example, the system 50 includes an apparatus for determining whether or not the vehicle 100 is traveling straight ahead. The apparatus for determining whether or not the vehicle 100 is traveling straight ahead may be the server 200, or may be installed in the vehicle 100. For example, the server 200 may determine whether or not the vehicle 100 is traveling straight ahead based on an image of the sensor 300. In a case where the apparatus is mounted on the vehicle 100, the apparatus makes a determination based on received control instruction values or the like.

The update unit 1174 obtains an update value of the straight-ahead steering angle and writes the updated value in a memory or the like. Accordingly, it is possible to obtain a set value of the straight-ahead steering angle for performing a feedback control with a high accuracy. Accordingly, it becomes possible to appropriately control traveling of the vehicle 100. That is, it is possible to control the position displacement in the transverse direction in the vehicle 100 that travels by itself during the manufacturing. Accordingly, the vehicle 100 can travel with a high position accuracy.

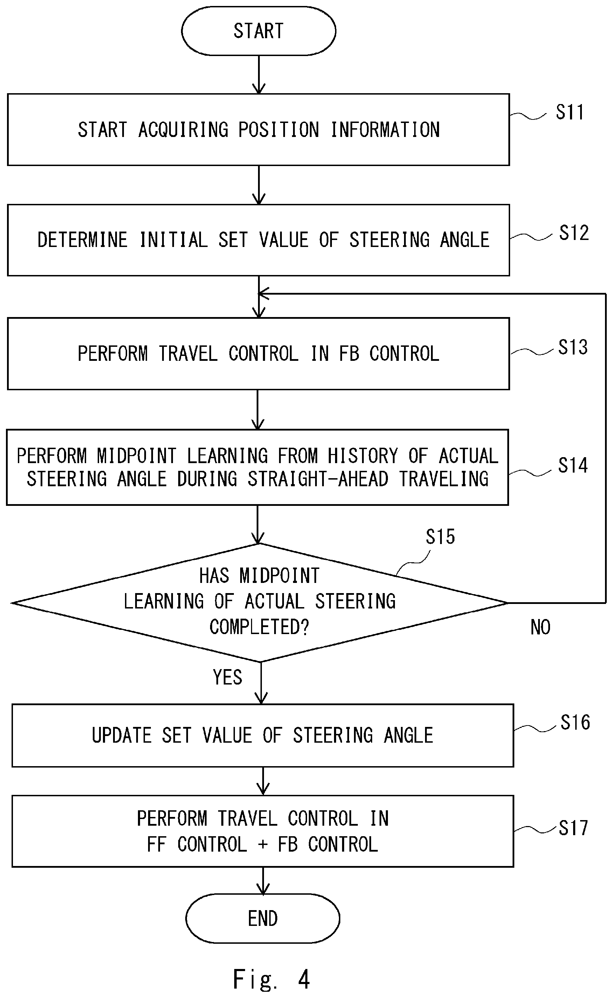

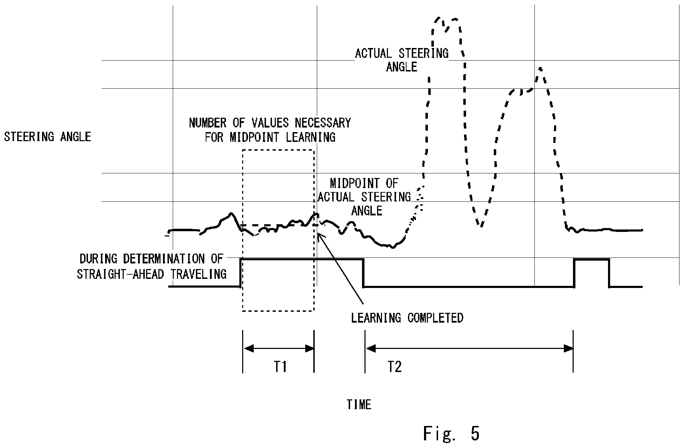

Hereinafter, with reference to Figs. 4 and 5, details of processing will be described. Fig. 4 is a flowchart showing a method for controlling a vehicle. Fig. 5 is a graph indicating measured data of an actual steering angle in the steering angle sensor 1178.

As shown in Fig. 4, the position calculation unit 252 starts acquiring position information of the vehicle 100 (S11). The straight-ahead steering angle acquisition unit 1173 determines an initial set value of the straight-ahead steering angle (S12). In a start point of the straight route TR1, the straight-ahead steering angle acquisition unit 1173 temporarily determines a midpoint of steering as an initial set value of the straight-ahead steering angle. For example, the straight-ahead steering angle acquisition unit 1173 performs a lock-to-lock control on the steering motor 1212 to cause the steering to move from one end to the other end.

For example, left and right stoppers are set in a steering gear. A value (midpoint) of a motor angle at which the steering is at the left end and a motor angle at which the steering is at the right end is set as an initial set value of the straight-ahead steering angle. Therefore, the initial set value is an average value of the motor angles at left and right ends. The straight-ahead steering angle acquisition unit 1173 sets an intermediate value of the straight-ahead steering angle as the initial set value at a timing when the vehicle 100 starts traveling along the straight route TR1. The straight-ahead steering angle acquisition unit 1173 writes the initial set value of the straight-ahead steering angle in a memory or the like.

Next, in the straight route TR1, the first control unit 1171 performs travel control in feedback control (FB control) (S13). Note that the position calculation unit 252 calculates position information indicating the position of the vehicle 100 in the transverse direction or the orientation thereof in the traveling path TR. Further, in the first period T1, the first control unit 1171 starts a feedback control by using the initial set value of the straight-ahead steering angle. Accordingly, the vehicle 100 starts autonomous traveling along the straight route TR1. The first control unit 1171 calculates deviation information indicating deviation (displacement) between the straight route TR1 and the vehicle 100 in the transverse direction. The first control unit 1171 controls the steering angle of the vehicle 100 in accordance with the deviation information.

The first control unit 1171 controls the steering motor 1212 in such a way that the vehicle 100 approaches the straight route TR1. Accordingly, the vehicle 100 travels substantially straight ahead along the straight route TR1. The first control unit 1171 performs a feedback control by using the initial set value of the straight-ahead steering angle in such a way that the vehicle 100 moves along the straight route TR1. While the vehicle 100 is traveling straight ahead, the steering angle sensor 1178 measures the actual steering angle.

Fig. 5 is a graph showing a change in the actual steering angle measured by the steering angle sensor 1178. The horizontal axis indicates time and the longitudinal axis indicates a measured value of the steering angle sensor 1178. The update unit 1174 performs midpoint learning of steering from the history of the actual steering angle (S14). The steering angle sensor 1178 measures the actual steering angle during a period in which the first control unit 1171 is performing a feedback control in such a way that the vehicle 100 travels straight ahead along the straight route TR1. The steering angle sensor 1178 measures the actual steering angle in a predetermined sampling period. In the first period T1, the update unit 1174 learns the midpoint of the steering motor from the history of measuring the actual steering angle.

Next, the update unit 1174 determines whether or not midpoint learning has completed (S15). In this example, the update unit 1174 determines whether or not the number of measured values of the steering angle sensor 1178 has becomes equal to or greater than a predetermined number. The update unit 1174 determines, for example, whether or not the midpoint learning has completed depending on whether the number of measured values that have been collected has become equal to or greater than the predetermined number.

In a case where the midpoint learning has not completed (NO in S15), the process returns to Step S13. While the first control unit 1171 is continuously performing a feedback control (S13), the update unit 1174 performs midpoint learning (S14). That is, the first control unit 1171 continues the feedback control until the number of measured values of the steering angle sensor 1178 reaches the predetermined number.

If the midpoint learning has completed (YES in S15), the update unit 1174 updates the set value of the straight-ahead steering angle (S16). For example, the system 50 determine whether or not the vehicle is traveling straight ahead, and the update unit 1174 obtains an update value of the straight-ahead steering angle based on a distribution of the steering angle sensor 1178 during a period in which it is determined that the vehicle is traveling straight ahead. For example, the system 50 includes an apparatus for determining whether or not the vehicle 100 is traveling straight ahead. In a case where it is determined that the vehicle 100 is traveling straight ahead, the update unit 1174 calculates the update value of the straight-ahead steering angle based on a distribution of the measurement value of the steering angle sensor 1178 during a period in which the vehicle 100 is traveling straight ahead. More specifically, the update unit 1174 sets a midpoint (average value) of measured values of the steering angle sensor 1178 in the first period T1 as an update value of the straight-ahead steering angle. Accordingly, it is possible to obtain a straight-ahead steering angle with a high accuracy.

Then, the second control unit 1172 performs a feedback control and a feedforward control (S17). The second control unit 1172 controls the steering motor in a state in which the feedforward component is increased compared to that in the control in the first control unit 1171. Specifically, the second control unit 1172 obtains a target steering angle in such a way that the vehicle 100 turns with a predetermined turning radius in the turning route TR2. Specifically, the second control unit 1172 determines the target steering angle in accordance with vehicle information regarding the size of the vehicle 100 and the curvature of the target turning route TR2. The second control unit 1172 performs a feedforward-control of the steering motor 1212 in such a way that the steering angle becomes the target steering angle. The second control unit 1172 further performs a feedback-control of the steering motor 1212 based on the information on the deviation between the target route and position information when the vehicle is steered in accordance with the target value in the second period.

As described above, the second control unit 1172 performs a feedback-control and a feedforward-control of the steering angle. Specifically, the second control unit 1172 performs a feedforward control in such a way that the steering angle becomes a target steering angle in accordance with the radius of curvature. Further, while the vehicle 100 is turning along the turning route TR2, the second control unit 1172 performs a feedback control based on deviation information indicating a displacement from the turning route TR2 in the transverse direction. That is, the second control unit 1172 multiplies the deviation information by the feedback gain to perform a feedback-control of the steering motor 1212. Accordingly, the vehicle 100 may accurately travel along the turning route TR2.

In the second period T2 after the first period T1, the second control unit 1172 controls the steering motor 1212 in such a way that the feedforward component is increased. In other words, the second control unit 1172 controls the steering motor 1212 in such a way that the feedback component is reduced. For example, in the second period T2, the second control unit 1172 may decrease the feedback gain for the deviation information than that in the first period T1. Accordingly, it is possible to appropriately control traveling of a vehicle in the second period T2.

Further, in the first period T1, the vehicle 100 travels at a speed lower than that in the second period T2. That is, the vehicle 100 travels at a low speed before the update unit 1174 updates the straight-ahead steering angle. Accordingly, the vehicle 100 can travel to the first point P1 at a high position accuracy.

Further, the shape of the turning route TR2 is not limited to an arcuate shape. That is, the shape of the target route in the second period T2 may be any shape as long as it is curved to at least one of left or right. Further, a path that is bent both to the left and right may be set as a target route. In this case as well, the second control unit 1172 may calculate, by geometric calculation, a target steering angle based on a known target route and information on the size of the vehicle. Further, the server 200 may calculate the target steering angle.

In the following, travel control examples for controlling traveling of the vehicle 100 in the system will be described.

### <A. Travel Control Example 1>

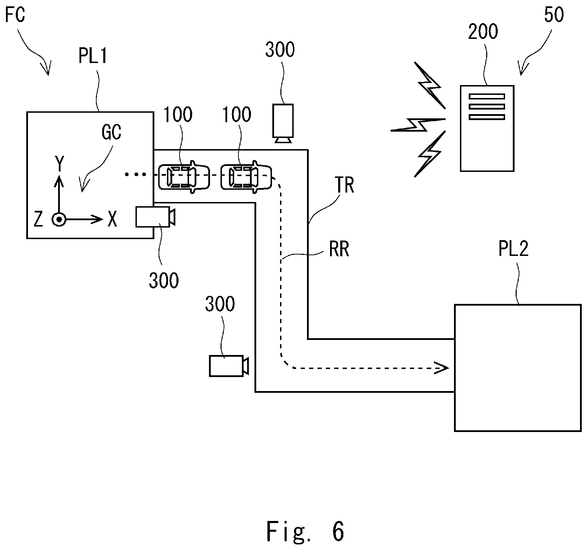

Fig. 6 is a conceptual diagram showing a configuration of a system 50 according to a travel control example 1. The system 50 includes a plurality of vehicles 100, each of which corresponds to a mobile body, a server 200, and one or more sensors 300.

Note that, when the mobile body is other than a vehicle, the terms "vehicle" and "car" in the present disclosure can be replaced by a "mobile body" as appropriate, and the term "travel" can be replaced by "move" as appropriate.

The vehicle 100 is configured to be able to travel by unmanned driving. The "unmanned driving" means driving not dependent on a driver's traveling operation. The traveling operation means an operation regarding at least one of "run", "turn", or "stop" of the vehicle 100. The unmanned driving is achieved by automatic or manual remote control that uses an apparatus located in the outside of the vehicle 100, or by autonomous control of the vehicle 100. Any passenger who does not perform the traveling operation may get on the vehicle 100 traveled by unmanned driving. The passenger who does not perform the traveling operation includes, for example, a person who is just sitting on a seat of the vehicle 100, and a person who is performing work such as an operation of assembling, an operation of inspection, or an operation of switches, which is an operation other than the traveling operation, while getting in the vehicle 100. Note that the driving by the traveling operation of the driver may be referred to as "manned driving".

The "remote control" here includes "complete remote control" in which all the operations of the vehicle 100 are completely determined from the outside of the vehicle 100 and "partial remote control" in which a part of the operations of the vehicle 100 is determined from the outside of the vehicle 100. Further, "autonomous control" includes "complete autonomous control" in which the vehicle 100 autonomously controls its own operation without receiving any piece of information from an external apparatus outside the vehicle 100 and "partial autonomous control" in which the vehicle 100 autonomously controls its own operation using information received from the external apparatus outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of sensors 300 are installed along the traveling path TR in the factory FC. The positions of the respective sensors 300 in the factory FC are adjusted in advance. The vehicle 100 moves from the first place PL1 to the second place PL2 along the traveling path TR by unmanned driving.

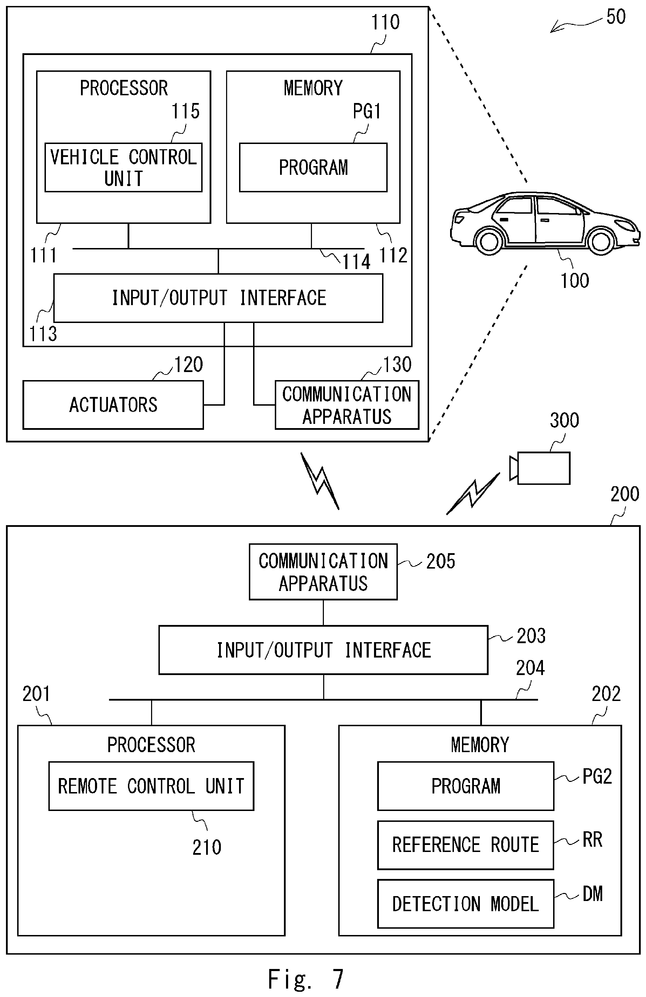

Fig. 7 is a block diagram showing a configuration of the system 50. The vehicle 100 includes a vehicle control apparatus 110 for controlling each part of the vehicle 100, actuators 120 including one or more actuators that drive under a control of the vehicle control apparatus 110, and a communication apparatus 130 for communicating with an external apparatus such as the server 200 by wireless communication. The actuators 120 include an actuator of a drive apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a travel control signal received from the server 200. The travel control signal is a control signal for traveling the vehicle 100. In this embodiment, the travel control signal includes an acceleration and a steering angle of the vehicle 100 as parameters. In another embodiment, the travel control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. A communication apparatus 205 for communicating with various kinds of apparatuses provided outside the server 200 is connected to the input/output interface 203. The communication apparatus 205 can communicate with the vehicle 100 by wireless communication and can communicate with each of the sensors 300 by wired communication or wireless communication. The processor 201 executes a program PG2 stored in the memory 202, thereby implementing various functions including the function as a remote control unit 210.

The remote control unit 210 acquires a result of detection by the sensors, generates a travel control signal for controlling the actuators 120 of the vehicle 100 using the result of the detection, and transmits the travel control signal to the vehicle 100, thereby causing the vehicle 100 to travel by remote control. The remote control unit 210 may generate not only the travel control signal but also, for example, control signals for controlling actuators for operating various kinds of auxiliary equipment provided in the vehicle 100 or various kinds of equipment such as a windshield wiper, power windows, or lamps. That is, the remote control unit 210 may operate these various kinds of equipment or various kinds of auxiliary equipment by remote control.

The sensor 300 is a sensor that is provided outside the vehicle 100. The sensor 300 according to this embodiment is a sensor that captures the vehicle 100 from the outside of the vehicle 100. The sensor 300 includes a communication apparatus (not shown) and can communicate with other apparatuses such as the server 200 and so on by wired communication or wireless communication.

Specifically, the sensor 300 is composed of a camera. The camera as the sensor 300 captures an image including the vehicle 100, and outputs the captured image as a result of detection.

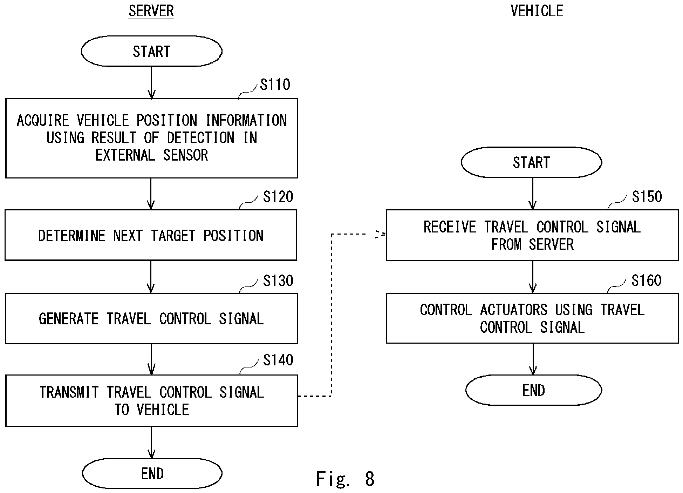

Fig. 8 is a flowchart showing a processing procedure of travel control of the vehicle 100 according to the travel control example. In the processing procedure shown in Fig. 8, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using the result of the detection output from the sensor 300. The vehicle position information is position information that forms a basis for generating a travel control signal. In this embodiment, the vehicle position information includes the position and the orientation of the vehicle 100 in a global coordinate system GC of the factory FC. Specifically, in Step S110, the processor 201 acquires the vehicle position information using the captured image acquired from the camera, which is the sensor 300.

Specifically, in Step S110, the processor 201 detects, for example, the outline of the vehicle 100 from the captured image, calculates the coordinate system of the captured image, that is, coordinates of measurement points of the vehicle 100 in the local coordinate system, and converts the calculated coordinates into coordinates in a global coordinate system GC, thereby acquiring the position of the vehicle 100. The outline of the vehicle 100 included in the captured image can be detected, for example, by inputting the captured image to the detection model DM that uses artificial intelligence. The detection model DM is prepared, for example, in the system 50 or in the outside of the system 50 and is stored in the memory 202 of the server 200 in advance. The detection model DM may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the vehicle 100, and a label indicating whether each area in the training image is an area indicating the vehicle 100 or an area indicating a part other than the vehicle 100. When CNN learning is performed, parameters of the CNN are preferably updated in such a way that the error between the result of the output by the detection model DM and the label is reduced by a back propagation method. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines the target position that the vehicle 100 should go next. In this embodiment, the target position is expressed by coordinates of X, Y, and Z in a global coordinate system GC. The memory 202 of the server 200 stores a reference route RR, which is a route along which the vehicle 100 should travel, in advance. The route is expressed by a node indicating the departure place, nodes indicating passage points, a node that indicates the target position, and a link connecting the respective nodes. The processor 201 determines the target position that the vehicle 100 should go next using the vehicle position information and the reference route RR. The processor 201 determines the target position on the reference route RR which is ahead of the current position of the vehicle 100.

In Step S130, the processor 201 of the server 200 generates a travel control signal for traveling the vehicle 100 toward the determined target position. The processor 201 calculates the traveling speed of the vehicle 100 from the transition of the position of the vehicle 100 and compares the calculated traveling speed with the target speed. In general, when the traveling speed is lower than the target speed, the processor 201 determines the acceleration in such a way that the vehicle 100 accelerates. On the other hand, when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration to prevent the vehicle 100 from being deviated from the reference route RR. On the other hand, when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated travel control signal to the vehicle 100. The processor 201 repeats, in a predetermined cycle, acquisition of the position of the vehicle 100, determination of the target position, generation of the travel control signal, transmission of the travel control signal, and the like.

In Step S150, the processor 111 of the vehicle 100 receives the travel control signal transmitted from the server 200. In Step S160, the processor 111 of the vehicle 100 controls the actuators 120 using the received travel control signal, thereby causing the vehicle 100 to travel at an acceleration and a steering angle indicated in the travel control signal. The processor 111 repeats reception of the travel control signal, and control of the actuators 120 in a predetermined cycle. With the system 50 in this example, it is possible to cause the vehicle 100 to travel by remote control and to move the vehicle 100 without using transport equipment such as cranes or conveyors.

### <B: Travel Control Example 2>

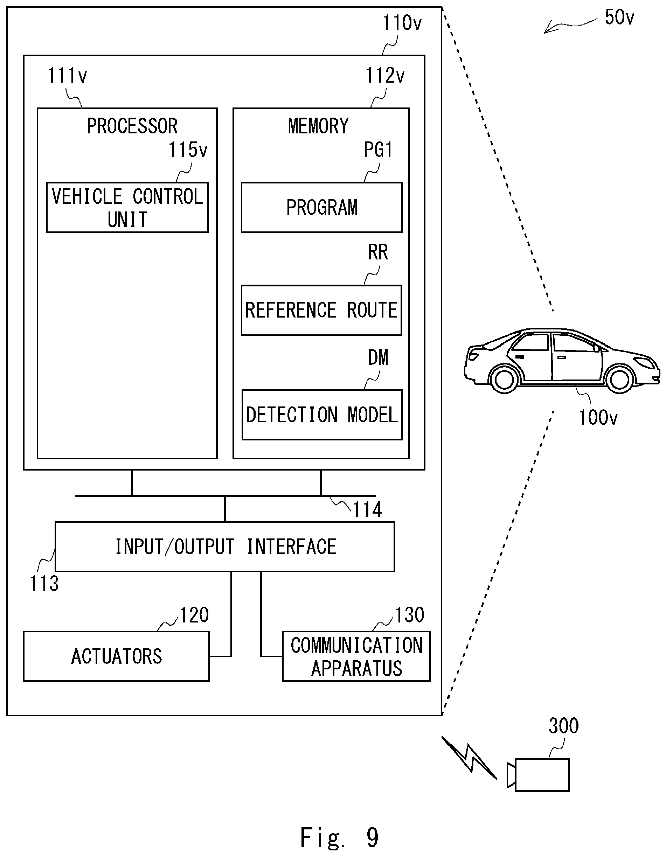

Fig. 9 is an explanatory diagram showing a schematic configuration of a system 50v according to a travel control example 2. In this example, the system 50v is different from that in the travel control example 1 in that the system 50v does not include the server 200. Further, a vehicle 100v in this configuration can travel by autonomous control of the vehicle 100v. The other configurations are the same as those stated above unless otherwise specified.

In this example, a processor 111v of a vehicle control apparatus 110v functions as a vehicle control unit 115v by executing a program PG1 stored in a memory 112v. The vehicle control unit 115v acquires a result of output by a sensor, generates a travel control signal using the result of the output, and outputs the generated travel control signal to operate the actuators 120, thereby enabling the vehicle 100v to travel by autonomous control. In this example, the memory 112v stores, besides the program PG1, a detection model DM and a reference route RR in advance.

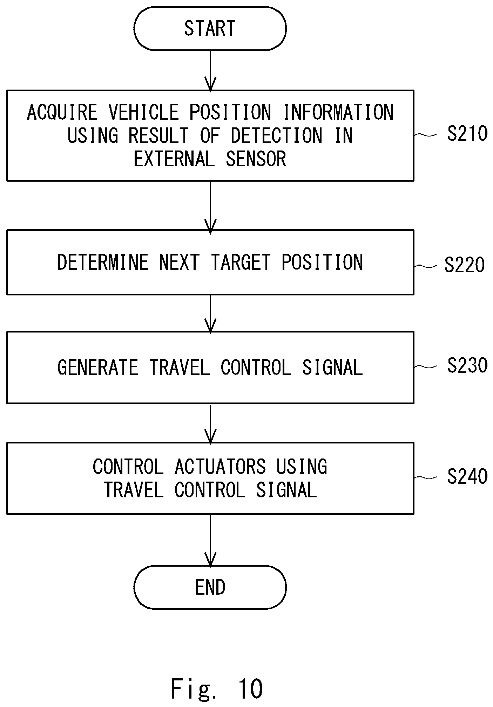

Fig. 10 is a flowchart showing a processing procedure of a travel control of the vehicle 100v in Travel control Example 2. In the processing procedure shown in Fig. 10, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the sensor 300. In Step S220, the processor 111v determines the target position that the vehicle 100v should go next. In Step S230, the processor 111v generates a travel control signal for causing the vehicle 100v to travel toward the determined target position. In Step S240, the processor 111v controls the actuators 120 using the generated travel control signal, thereby causing the vehicle 100v to travel according to a parameter indicated in the travel control signal. The processor 111v repeats acquisition of the vehicle position information, determination of the target position, generation of the travel control signal, and control of the actuators in a predetermined cycle. With the system 50v in this example, it is possible to cause the vehicle 100v to travel by autonomous control of the vehicle 100v without remotely controlling the vehicle 100v by the server 200.

### YY: Other Travel Control Examples

(YY1) In the above examples, the sensor 300 is a camera. On the other hand, the sensor 300 may not be a camera, and may instead be, for example, Light Detection And Ranging (LiDAR). In this case, the result of the detection output from the sensor 300 may be three dimensional point cloud data indicating the vehicle 100. In this case, the server 200 and the vehicle 100 may acquire the vehicle position information by template matching that uses three dimensional point cloud data indicating the result of the detection and reference point cloud data that is prepared in advance.

(YY2) In the travel control example 1, the server 200 executes processing from the acquisition of the vehicle position information to the generation of the travel control signal. On the other hand, the vehicle 100 may perform at least a part of the processing from the acquisition of the vehicle position information to the generation of the travel control signal. For example, the following forms from (1) to (3) may be employed.
(1) The server 200 may acquire vehicle position information, determine the target position that the vehicle 100 should go next, and generate a route from the current position of the vehicle 100 indicated in the acquired vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators 120 using the generated travel control signal.
(2) The server 200 may acquire vehicle position information and transmit the acquired vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators 120 using the generated travel control signal.
(3) In the forms of the above (1) and (2), an internal sensor may be mounted on the vehicle 100, and a result of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the result of the detection in the internal sensor and reflect the result of the detection in the internal sensor in the route when the route is generated. In the form of the above (1), the vehicle 100 may acquire the result of the detection in the internal sensor and reflect the result of the detection in the internal sensor in a travel control signal when the travel control signal is generated. In the form of the above (2), the vehicle 100 may acquire the result of the detection in the internal sensor, and reflect the result of the detection in the internal sensor in the route when the route is generated. In the form of the above (2), the vehicle 100 may acquire the result of the detection in the internal sensor, and reflect the result of the detection in the internal sensor in the travel control signal when the travel control signal is generated.

(YY3) In the travel control example 2, an internal sensor may be mounted on the vehicle 100v and the result of the detection output from the internal sensor may be used in at least one of the generation of the route or the generation of the travel control signal. For example, the vehicle 100v may acquire the result of the detection in the internal sensor, and reflect the result of the detection in the internal sensor in the route when the route is generated. The vehicle 100v may acquire the result of the detection in the internal sensor and reflect the result of the detection in the internal sensor in the travel control signal when the travel control signal is generated.

(YY4) In the travel control example 2, the vehicle 100v acquires the vehicle position information using the result of the detection in the sensor 300. On the other hand, an internal sensor is mounted on the vehicle 100v, and the vehicle 100v may acquire vehicle position information using a result of detection in the internal sensor, determine the target position that the vehicle 100v should go next, generate a route from the current position of the vehicle 100v indicated in the acquired vehicle position information to the target position, generate a travel control signal for traveling along the generated route, and control the actuators 120 using the generated travel control signal. In this case, the vehicle 100v may travel without using the result of the detection in the sensor 300. Note that the vehicle 100v may acquire a target arrival time or congestion information from the outside of the vehicle 100v and reflect the target arrival time or the congestion information in at least one of the route or the travel control signal. Further, all the functional configurations of the system 50v may be provided in the vehicle 100v. That is, the processing implemented by the system 50v in the present disclosure may be achieved by the vehicle 100v alone. For example, a leading vehicle 100v may transmit control instruction values to the following vehicle 100.

(YY5) In the travel control example 1, the server 200 automatically generates a travel control signal to be transmitted to the vehicle 100. On the other hand, the server 200 may generate the travel control signal to be transmitted to the vehicle 100 in accordance with an operation performed by an external operator located in the outside of the vehicle 100. For example, the external operator may operate a manipulation apparatus including a display for displaying a captured image output from the sensor 300, a steering, an accelerator pedal, and a brake pedal for remotely operating the vehicle 100, and a communication apparatus for communicating with the server 200 by wired communication or wireless communication, and the server 200 may generate a travel control signal in accordance with the operation added to the manipulation apparatus.

(YY6) In each of the above travel control examples, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus 110 and the actuators 120 in order to exert three functions of "run", "turn", and "stop" by unmanned driving. In a case where the vehicle 100 externally acquires information for unmanned driving, the vehicle 100 may further include a communication apparatus 130. That is, the vehicle 100 that can move by unmanned driving may not be provided with at least some of internal components such as a driving seat or a dashboard, at least some of the external components such as a bumper or a fender, or a body shell. In this case, before the vehicle 100 is shipped from the factory FC, the other components such as a body shell may be mounted on the vehicle 100, or the other components such as the body shell may be mounted on the vehicle 100 after the vehicle 100 is shipped from the factory FC in a state in which the other components such as the body shell are not mounted on the vehicle 100. Each of the components may be mounted thereon from a desired direction such as an upper side, a lower side, a front side, a rear side, a right side, or a left side of the vehicle 100, mounted thereon from the same direction, or mounted thereon from different directions. In terms of the form of the platform, the position may be determined as in the vehicle 100 according to the first embodiment.

(YY7) The vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

(YY8) Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

(YY9) In each of the above travel control examples, some or all of the functions and processing implemented in the form of software may be implemented in the form of hardware. Further, some or all of the functions and processing implemented in the form of hardware may be implemented in the form of software. For example, various types of circuits such as an integrated circuit or a discrete circuit may be used as hardware for implementing various types of functions in each of the above embodiments.

Further, some or all of the processing performed in the vehicle 100, the server 200, the sensor 300, the robot 600, and so on described above may be implemented as a computer program.

A (The) program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

## Claims

1. A vehicle manufacturing system (50) comprising:
an acquisition unit (1173) configured to acquire a set value of a straight-ahead steering angle in a manufacturing process or a transporting process, wherein the set value of the straight-ahead steering angle is the value of the steering angle at which the vehicle travels straight ahead;
a detection unit (1178) configured to detect position information on a position of the vehicle in a transverse direction or an orientation of the vehicle;
a first control unit (1171) configured to control a steering angle of the vehicle (100) in accordance with a straight route and the position information in such a way that the vehicle moves along the straight route in a first period in which the vehicle moves straight ahead to a first point using the set value;
an update unit (1174) configured to update the set value of the straight-ahead steering angle in accordance with a result of traveling in the first period to obtain an update value; and
a second control unit (1172) configured to:
control the steering angle by making distributions of a feedback component and a feedforward component in the control in the first control unit (1171) change in a second period in which the vehicle moves to a second point using the update value after the vehicle (100) reaches the first point;
cause a distribution of the feedback component in the second period to be lower than that in the first period;
determine a target value of the steering angle in a feedforward control in accordance with vehicle information on a size of the vehicle and a curvature of a target route; and
perform, in the second period, a feedback-control of the steering angle based on information on deviation between the target route and the position information when the vehicle is steered in accordance with the target value,
wherein the vehicle manufacturing system comprises an apparatus configured to determine whether or not the vehicle (100) is traveling straight ahead, wherein the update value of the straight-ahead steering angle is obtained in accordance with a distribution of a measurement value of a steering angle sensor in a period in which the apparatus determines that the vehicle is traveling straight ahead.

2. The vehicle manufacturing system according to any one of claim 1, wherein the acquisition unit (1173) is configured to acquire the set value based on an intermediate value when lock-to-lock steering of a steering angle is performed from one end to another end of the steering.

3. The vehicle manufacturing system according to claim 1 or 2, wherein, in the first period, the vehicle (100) moves at a speed lower than that in the second period.

4. A vehicle manufacturing method comprising:
an acquisition step of acquiring a set value of a straight-ahead steering angle in a manufacturing process or a transporting process, wherein the set value of the straight-ahead steering angle is the value of the steering angle at which the vehicle travels straight ahead;
a detection step of detecting position information on a position of the vehicle in a transverse direction or an orientation of the vehicle (100);
a first control step of controlling a steering angle of the vehicle (100) in accordance with a straight route and the position information in such a way that the vehicle moves along the straight route in a first period in which the vehicle (100) moves straight ahead to a first point using the set value;
an update step of updating the set value of the straight-ahead steering angle in accordance with a result of traveling in the first period to obtain an update value; and
a second control step of:
controlling the steering angle by making distributions of a feedback component and a feedforward component in the control in the first control step change in a second period in which the vehicle (100) moves to a second point using the update value after the vehicle reaches the first point
making a distribution of the feedback component in the second period lower than that in the first period;
determining a target value of the steering angle in a feedforward control in accordance with vehicle information on a size of the vehicle (100) and a curvature of a target route; and
performing in the second period, a feedback-control of the steering angle based on information on deviation between the target route and the position information when the vehicle is steered in accordance with the target value;
determining whether or not the vehicle is traveling straight ahead, and
obtaining the update value of the straight-ahead steering angle in accordance with a distribution of a measurement value of a steering angle sensor in a period in which it is determined that the vehicle is traveling straight ahead.

5. The vehicle manufacturing method according to claim 4, wherein, in the acquisition step, the set value is acquired based on an intermediate value when lock-to-lock steering of a steering angle is performed from one end to another end of the steering.

6. The vehicle manufacturing method according to claim 4 or 5, wherein, in the first period, the vehicle moves at a speed lower than that in the second period.

## Patentansprüche

1. Fahrzeugherstellungssystem (50), das Folgendes umfasst:
eine Erfassungseinheit (1173), die dazu ausgelegt ist, einen Sollwert eines Geradeauslenkwinkels in einem Herstellungsprozess oder einem Transportprozess zu erfassen, wobei der Sollwert des Geradeauslenkwinkels der Wert des Lenkwinkels ist, mit dem das Fahrzeug geradeaus fährt;
eine Detektionseinheit (1178), die dazu ausgelegt ist, Positionsinformationen über eine Position des Fahrzeugs in einer Querrichtung oder eine Ausrichtung des Fahrzeugs zu detektieren;
eine erste Steuereinheit (1171), die dazu ausgelegt ist, einen Lenkwinkel des Fahrzeugs (100) gemäß einer geraden Route und den Positionsinformationen so zu steuern, dass sich das Fahrzeug entlang der geraden Route in einer ersten Periode bewegt, in der sich das Fahrzeug unter Verwendung des Sollwerts geradeaus zu einem ersten Punkt bewegt;
eine Aktualisierungseinheit (1174), die dazu ausgelegt ist, den eingestellten Wert des Geradeauslenkwinkels gemäß einem Ergebnis einer Fahrt in der ersten Periode zu aktualisieren, um einen Aktualisierungswert zu erhalten; und
eine zweite Steuereinheit (1172), die ausgelegt ist zum:
Steuern des Lenkwinkels durch Ändern von Verteilungen einer Rückkopplungskomponente und einer Vorwärtskopplungskomponente in der Steuerung in der ersten Steuereinheit (1171) in einer zweiten Periode, in der sich das Fahrzeug unter Verwendung des Aktualisierungswerts zu einem zweiten Punkt bewegt, nachdem das Fahrzeug (100) den ersten Punkt erreicht hat;
Bewirken, dass eine Verteilung der Rückkopplungskomponente in der zweiten Periode niedriger als jene in der ersten Periode ist;
Bestimmen eines Zielwerts des Lenkwinkels in einer Vorwärtskopplungssteuerung gemäß Fahrzeuginformationen über eine Größe des Fahrzeugs und eine Krümmung einer Zielroute; und
Durchführen, in der zweiten Periode, einer Rückkopplungssteuerung des Lenkwinkels basierend auf Informationen über eine Abweichung zwischen der Zielroute und den Positionsinformationen, wenn das Fahrzeug gemäß dem Zielwert gelenkt wird,
wobei das Fahrzeugherstellungssystem eine Einrichtung umfasst, die dazu ausgelegt ist, zu bestimmen, ob das Fahrzeug (100) geradeaus fährt oder nicht, wobei der Aktualisierungswert des Geradeauslenkwinkels gemäß einer Verteilung eines Messwerts eines Lenkwinkelsensors in einer Periode erhalten wird, in der die Einrichtung bestimmt, dass das Fahrzeug geradeaus fährt.

2. Fahrzeugherstellungssystem nach einem der Ansprüche 1, wobei die Erfassungseinheit (1173) dazu ausgelegt ist, den Sollwert basierend auf einem Zwischenwert zu erfassen, wenn eine Anschlag-zu-Anschlag-Lenkung eines Lenkwinkels von einem Ende zu einem anderen Ende der Lenkung durchgeführt wird.

3. Fahrzeugherstellungssystem nach Anspruch 1 oder 2, wobei sich das Fahrzeug (100) in der ersten Periode mit einer Geschwindigkeit bewegt, die niedriger als die in der zweiten Periode ist.

4. Fahrzeugherstellungsverfahren, das Folgendes umfasst:
einen Erfassungsschritt zum Erfassen eines Sollwerts eines Geradeauslenkwinkels in einem Herstellungsprozess oder einem Transportprozess, wobei der Sollwert des Geradeauslenkwinkels der Wert des Lenkwinkels ist, bei dem das Fahrzeug geradeaus fährt;
einen Detektionsschritt zum Detektieren von Positionsinformationen über eine Position des Fahrzeugs in einer Querrichtung oder einer Ausrichtung des Fahrzeugs (100);
einen ersten Steuerschritt zum Steuern eines Lenkwinkels des Fahrzeugs (100) gemäß einer geraden Route und den Positionsinformationen derart, dass sich das Fahrzeug entlang der geraden Route in einer ersten Periode bewegt, in der sich das Fahrzeug (100) unter Verwendung des Sollwerts geradeaus zu einem ersten Punkt bewegt;
einen Aktualisierungsschritt zum Aktualisieren des Sollwerts des Geradeauslenkwinkels gemäß einem Ergebnis einer Fahrt in der ersten Periode, um einen Aktualisierungswert zu erhalten; und
einen zweiten Steuerschritt zum:
Steuern des Lenkwinkels durch Ändern von Verteilungen einer Rückkopplungskomponente und einer Vorwärtskopplungskomponente in der Steuerung in dem ersten Steuerschritt in einer zweiten Periode, in der sich das Fahrzeug (100) unter Verwendung des Aktualisierungswerts zu einem zweiten Punkt bewegt, nachdem das Fahrzeug den ersten Punkt erreicht hat;
Bewirken, dass eine Verteilung der Rückkopplungskomponente in der zweiten Periode niedriger als jene in der ersten Periode ist;
Bestimmen eines Zielwerts des Lenkwinkels in einer Vorwärtskopplungssteuerung gemäß Fahrzeuginformationen über eine Größe des Fahrzeugs (100) und eine Krümmung einer Zielroute; und
Durchführen, in der zweiten Periode, einer Rückkopplungssteuerung des Lenkwinkels basierend auf Informationen über eine Abweichung zwischen der Zielroute und den Positionsinformationen, wenn das Fahrzeug gemäß dem Zielwert gelenkt wird,
Bestimmen, ob das Fahrzeug geradeaus fährt oder nicht, und Erhalten des Aktualisierungswerts des Geradeauslenkwinkels gemäß einer Verteilung eines Messwerts eines Lenkwinkelsensors in einer Periode, in der bestimmt wird, dass das Fahrzeug geradeaus fährt.

5. Fahrzeugherstellungsverfahren nach Anspruch 4, wobei in dem Erfassungsschritt der Sollwert basierend auf einem Zwischenwert erfasst wird, wenn eine Anschlag-zu-Anschlag-Lenkung eines Lenkwinkels von einem Ende zu einem anderen Ende der Lenkung durchgeführt wird.

6. Fahrzeugherstellungsverfahren nach Anspruch 4 oder 5, wobei sich das Fahrzeug in der ersten Periode mit einer Geschwindigkeit bewegt, die niedriger als die in der zweiten Periode ist.

## Revendications

1. Système de fabrication de véhicule (50) comprenant :
une unité d'acquisition (1173) configurée pour acquérir une valeur définie d'un angle de braquage en ligne droite dans un processus de fabrication ou un processus de transport, dans laquelle la valeur définie de l'angle de braquage en ligne droite est la valeur de l'angle de braquage auquel le véhicule se déplace en ligne droite ;
une unité de détection (1178) configurée pour détecter des informations de position d'une position du véhicule dans une direction transversale ou une orientation du véhicule ;
une première unité de commande (1171) configurée pour commander un angle de braquage du véhicule (100) selon un trajet rectiligne et les informations de position de telle manière que le véhicule se déplace le long du trajet rectiligne pendant une première période pendant laquelle le véhicule se déplace en ligne droite jusqu'à un premier point en utilisant la valeur définie ;
une unité de mise à jour (1174) configurée pour mettre à jour la valeur définie de l'angle de braquage en ligne droite en fonction d'un résultat de déplacement au cours de la première période afin d'obtenir une valeur de mise à jour ; et
une seconde unité de commande (1172) configurée pour :
commander l'angle de braquage en modifiant les répartitions d'une composante de rétroaction et d'une composante prédictive dans la commande dans la première unité de commande (1171) pendant une seconde période au cours de laquelle le véhicule se déplace vers un second point à l'aide de la valeur de mise à jour après que le véhicule (100) a atteint le premier point ;
faire en sorte qu'une répartition de la composante de rétroaction de la seconde période soit inférieure à celle de la première période ;
déterminer une valeur cible de l'angle de braquage dans une commande prédictive en fonction d'informations de véhicule sur une taille du véhicule et d'une courbure d'un trajet cible ; et
effectuer, pendant la seconde période, une commande de rétroaction de l'angle de braquage sur la base d'informations relatives à l'écart entre le trajet cible et les informations de position lorsque le véhicule est braqué conformément à la valeur cible,
dans lequel le système de fabrication de véhicule comprend un appareil configuré pour déterminer si le véhicule (100) se déplace en ligne droite ou non, la valeur de mise à jour de l'angle de braquage en ligne droite étant obtenue en fonction d'une répartition d'une valeur de mesure d'un capteur d'angle de braquage dans une période au cours de laquelle l'appareil détermine que le véhicule se déplace en ligne droite.

2. Système de fabrication de véhicule selon l'une quelconque de la revendication 1, dans lequel l'unité d'acquisition (1173) est configurée pour acquérir la valeur définie sur la base d'une valeur intermédiaire lorsqu'un braquage de butée à butée d'un angle de braquage est effectué d'une extrémité à une autre extrémité du braquage.

3. Système de fabrication de véhicule selon la revendication 1 ou 2, dans lequel, pendant la première période, le véhicule (100) se déplace à une vitesse inférieure à celle de la seconde période.

4. Procédé de fabrication d'un véhicule comprenant :
une étape d'acquisition consistant à acquérir une valeur définie d'un angle de braquage en ligne droite dans un processus de fabrication ou un processus de transport, dans laquelle la valeur définie de l'angle de braquage en ligne droite est la valeur de l'angle de braquage auquel le véhicule se déplace en ligne droite ;
une étape de détection consistant à détecter des informations de position d'une position du véhicule dans une direction transversale ou une orientation du véhicule (100) ;
une première étape de commande consistant à commander un angle de braquage du véhicule (100) selon un trajet rectiligne et les informations de position de telle manière que le véhicule se déplace le long du trajet rectiligne pendant une première période pendant laquelle le véhicule (100) se déplace en ligne droite jusqu'à un premier point en utilisant la valeur définie ;
une étape de mise à jour consistant à mettre à jour la valeur définie de l'angle de braquage en ligne droite en fonction d'un résultat de déplacement au cours de la première période afin d'obtenir une valeur de mise à jour ; et
une seconde étape de commande consistant à :
commander l'angle de braquage en modifiant les répartitions d'une composante de rétroaction et d'une composante prédictive dans la commande de la première étape de commande pendant une seconde période au cours de laquelle le véhicule (100) se déplace vers un second point à l'aide de la valeur de mise à jour après que le véhicule a atteint le premier point ;
faire en sorte qu'une répartition de la composante de rétroaction de la seconde période soit inférieure à celle de la première période ;
déterminer une valeur cible de l'angle de braquage dans une commande prédictive en fonction d'informations de véhicule sur une taille du véhicule (100) et d'une courbure d'un trajet cible ; et
effectuer, pendant la seconde période, une commande de rétroaction de l'angle de braquage sur la base d'informations relatives à l'écart entre le trajet cible et les informations de position lorsque le véhicule est braqué conformément à la valeur cible ;
déterminer si le véhicule roule en ligne droite ou non, et obtenir la valeur de mise à jour de l'angle de braquage en ligne droite en fonction d'une répartition d'une valeur de mesure d'un capteur d'angle de braquage dans une période au cours de laquelle il est déterminé que le véhicule roule en ligne droite.

5. Procédé de fabrication de véhicule selon la revendication 4, dans lequel, à l'étape d'acquisition, la valeur définie est acquise sur la base d'une valeur intermédiaire lorsqu'un braquage de butée à butée d'un angle de braquage est effectué d'une extrémité à une autre extrémité du braquage.

6. Procédé de fabrication de véhicule selon la revendication 4 ou 5, dans lequel, pendant la première période, le véhicule se déplace à une vitesse inférieure à celle de la seconde période.
